# FASCICULE DE BREVET EUROPEEN

(11) **EP 4 296 136 B1**
(45) Date de publication et mention de la délivrance du brevet: **13.08.2025**
(21) Numéro de dépôt: 23178327.5
(22) Date de dépôt: 09.06.2023
(51) Int. Cl.: B60W 50/14, B60K 28/02

(54) **PROCÉDÉ D'ALERTE D'UN CONDUCTEUR D'UN VÉHICULE AUTOMOBILE APRÈS DÉTERMINATION DE ZONES NON SURVEILLÉES PAR LE CONDUCTEUR**
VERFAHREN ZUR WARNUNG EINES FAHRERS EINES KRAFTFAHRZEUGS NACH BESTIMMUNG VON VOM FAHRER NICHT ÜBERWACHTEN BEREICHEN
METHOD FOR WARNING A DRIVER OF A MOTOR VEHICLE AFTER DETERMINING AREAS NOT MONITORED BY THE DRIVER

(30) Priorité: 21.06.2022 FR 2206066
(43) Date de publication de la demande: 27.12.2023
(73) Titulaire: Orange, 92130 Issy-les-Moulineaux (FR)
(72) Inventeur: MONCOMBLE, Ghislain, 92326 Chatillon (FR); PUHARRE, Michel, 92326 Chatillon (FR); LEFEBVRE, Mathieu, 92326 Chatillon (FR)

(56) Documents cités:
- US-A1- 2011 169 625
- US-A1- 2020 250 982
- US-A1- 2021 245 775
- US-A1- 2022 118 997
- US-A1- 2022 121 867
- US-B1- 9 975 483

## Description

### Domaine technique

Le domaine technique est celui de l'aide à la conduite automobile.

Plus précisément, l'invention se rapporte à un procédé d'alerte d'un conducteur d'un véhicule automobile après détermination de zones non surveillées par le conducteur. Le conducteur en question est bien un conducteur humain, en charge de la conduite du véhicule automobile au moment de l'exécution du procédé. Si le véhicule automobile en question est un véhicule autonome, ou piloté à distance, qui est donc en général conduit sans intervention d'un passager à l'intérieur du véhicule, le procédé ne s'appliquera que quand le mode de conduite autonome est désactivé, et donc quand la conduite du véhicule automobile est confiée à un conducteur humain.

### Etat de la technique

Le domaine de la conduite automobile est à la veille de grands bouleversements induits par les progrès techniques récents. Le plus marquant est le développement de la conduite autonome. Les progrès attendus dans le domaine de la conduite autonome promettent d'améliorer significativement la sécurité routière en s'assurant que les erreurs de conduite humaines seront éliminées.

Par exemple, il existe un état de l'art significatif sur des dispositifs et procédés permettant de détecter automatiquement des dangers potentiels pour un véhicule. Ces dispositifs et procédés s'appuient d'abord sur l'établissement de scénarios de conduite qui permettent de catégoriser les dangers qui peuvent survenir selon la situation du véhicule. Ainsi, la détection par un véhicule autonome qu'il approche d'un croisement où il doit s'arrêter et laisser la priorité (croisement « stop ») permet de sélectionner des scénarios d'accident possibles à ce type de croisement. Le véhicule autonome utilisera alors l'ensemble de ses capteurs (caméras dans plusieurs directions, mais aussi éventuellement détecteurs radar et/ou lidar) pour chercher à détecter des dangers potentiels en fonction de sa situation et des scénarios d'accident possibles suivant sa situation. Le véhicule autonome pourra aussi utiliser, s'il est connecté à un réseau de communication, des informations complémentaires qui lui seraient transmises soit par d'autres véhicules connectés, soit par des services de régulation ou supervision routière. La détection par les capteurs du véhicule autonome, complétés éventuellement par d'autres sources d'information, d'un danger réel, peut alors déclencher tout un ensemble d'actions sur les organes de conduite du véhicule autonome, à savoir la direction, le freinage, ou l'accélération pour permettre d'éviter le danger réel et qu'il ne se concrétise pas en accident.

Un autre exemple de capacité de conduite autonome est celui de la détection que le véhicule va franchir une ligne inscrite sur la route qu'il ne doit pas franchir, comme une ligne continue, ou bien une ligne indiquant le bas-côté. L'alerte détectée peut alors déclencher une intervention sur un organe de conduite, à savoir la direction, pour éviter ce franchissement dangereux.

Cependant, la transition vers la généralisation de la voiture autonome va prendre du temps et sera réalisée par paliers. Des niveaux d'autonomie ont été définis et sont utilisés pour qualifier les véhicules en cours de développement. Le niveau 5 correspond à des véhicules totalement autonomes, tandis que le niveau 1 correspond à des véhicules dont le niveau d'autonomie est très limité, et comprend par exemple des radars de recul et des possibilités de garage autonome en marche arrière. Le niveau 0 correspond aux véhicules dépourvus de capacités de conduite autonome. En 2022, des prototypes de véhicules autonomes de niveau 4 sont en cours de certification par deux constructeurs automobiles, à savoir Mercedes-Benz et Tesla. Un niveau 4 correspond à des véhicules qui pourraient prendre le contrôle de la conduite sur des routes dûment identifiées, telles que des autoroutes.

La flotte de véhicules automobiles existants, non prévus pour une conduite autonome, est donc importante et va demeurer très majoritaire à échéance proche, sachant qu'aucun véhicule autonome de niveau 5 (entièrement autonome donc) n'est prévu d'ici 2025 au plus tôt. Les conducteurs humains sont et resteront donc très largement majoritaires pour une longue période. De plus, l'intégration à un organe de décision des organes de conduite (direction, accélération, freinage) d'un véhicule non prévu pour cela, c'est-à-dire chercher à rendre possible une action autonome sur la conduite du véhicule, est une opération très coûteuse. Les dispositifs et procédés de conduite autonome, ou bien la transformation des véhicules actuels en véhicules autonomes, ne sont donc pas une réponse immédiate et à coût raisonnable pour améliorer la sécurité routière.

Des dispositifs et procédés cherchent donc dès maintenant à améliorer la sécurité de la conduite des véhicules automobiles. En particulier, on trouve dans l'état de l'art des procédés et dispositifs de détection de l'attention des conducteurs. Ces procédés et dispositifs permettent de détecter un état de somnolence du conducteur et de déclencher une alerte si c'est le cas. Ces procédés et dispositifs de l'état de l'art s'appuient sur plusieurs techniques, telles que l'analyse des clignements d'yeux du conducteur, ou bien l'analyse de sa fréquence de bâillement, ou encore l'analyse de la position de la tête du conducteur. Un tel procédé permet d'alerter face à un danger potentiel, à savoir la baisse d'attention du conducteur.

D'autres procédés, non appliqués pour l'instant au domaine de la conduite automobile, ont également été étudiés pour déterminer la zone de surveillance d'un utilisateur, à savoir la zone qu'il surveille.

Il existe donc un besoin pour des procédés et dispositifs d'amélioration de la sécurité routière qui puissent être adaptés à bas coût sur les véhicules non autonomes de la flotte actuelle et qui s'appliquent à des dangers réels, en risque imminent de concrétisation, et pas uniquement à des dangers potentiels.

L'état de la technique comprend les documents suivants :
- La demande de brevet US 2022/0121867 A1 divulgue un procédé et dispositif de mesure d'attention du conducteur pour des véhicules à conduite semi-autonome.
- La demande de brevet US 2011/0169625 A1 divulgue un dispositif de détection de dangers dans l'environnement d'un véhicule.
- La demande de brevet US 2022/0118997 A1 divulgue un procédé et dispositif de notification de dangers au conducteur d'un véhicule.
- Le brevet US 9,975,483 B1 divulgue un dispositif d'aide à la conduite utilisant un ordiphone et des applications mobiles.

L'invention vient améliorer la situation.

### L'invention

Selon un premier aspect fonctionnel, l'invention a trait à un procédé d'alerte du conducteur d'un véhicule automobile comprenant les étapes suivantes :
- Une étape d'obtention d'une zone non surveillée par le conducteur et d'activation de capteurs du véhicule relativement à la zone non surveillée ;
- Une étape d'analyse des données captées par les capteurs relativement à ladite zone non surveillée pour détecter un événement à venir ;
- Une étape de restitution ou pas au conducteur d'une information représentative d'une alerte en fonction du résultat de l'étape d'analyse.

Et caractérisé en ce que l'obtention d'une zone non surveillée prend en compte le niveau d'attention du conducteur, de telle manière que plus le niveau d'attention est faible, plus la zone non surveillée obtenue est grande.

Grâce à l'invention, le conducteur du véhicule est alerté d'un événement imminent s'il a été analysé que celui-ci va survenir dans une zone qui n'a pas été surveillée par le conducteur. En variante, selon l'information représentative d'une alerte qui lui est restituée, le conducteur peut être simplement averti qu'il n'y a aucun danger en provenance des zones qu'il ne surveille pas. De cette manière, les données remontées par des capteurs situés autour du véhicule sont utilisées de façon pertinente, sans devoir être traitées par un système complet de conduite autonome. Le procédé peut donc être utilisé dans des véhicules automobiles de la génération actuelle, sans attendre de basculer dans l'utilisation de véhicules autonomes. L'amélioration apportée à la sécurité routière par le procédé est donc immédiate et à bas coût car elle ne nécessite pas le renouvellement de la flotte automobile, mais simplement la mise à disposition de capteurs qui peuvent être ajoutés à des véhicules existants.

Dans certains modes de réalisation, le procédé comprend une étape de détermination d'une zone dite de surveillance, que surveille le conducteur. L'obtention de la zone non surveillée va alors se faire en supposant que la zone non surveillée est complémentaire de la zone de surveillance. D'autres modes de réalisation ne déterminent pas une zone de surveillance. Par exemple, le procédé peut considérer que, par défaut, toutes les zones autour du véhicule sont non surveillées, et l'observation du conducteur va retirer des endroits de la zone non surveillée sans déterminer précisément une zone de surveillance. Dans ce mode de réalisation, l'observation que le conducteur porte son regard sur un endroit va retirer cet endroit de la zone non surveillée pendant une durée déterminée. Cet endroit reviendra dans la zone non surveillée à l'expiration de cette durée si le conducteur n'a pas de nouveau porté son regard sur cet endroit.

Il est à noter que les trois étapes du procédé, ou quatre dans les modes de réalisation qui comprennent une étape de détermination de la zone de surveillance, s'effectuent successivement mais peuvent être répétées dans une boucle permanente tout au long de la conduite, boucle pendant laquelle le procédé va à tout instant déterminer la ou les zones non surveillées par le conducteur ; à partir de cette information reçue de façon constante, analyser les données pertinentes et déclencher si besoin une ou des alertes ou juste restituer ou pas une information au conducteur.

Le fait d'activer des capteurs relativement à une zone non surveillée présente plusieurs avantages. D'abord, cette activation permet de garantir que des alertes remontées par les capteurs activés surviennent dans une zone non surveillée par le conducteur. De cette manière, le conducteur ne sera pas sollicité par des alertes inutiles. Un autre avantage est l'économie de ressources et de consommation énergétique. Les capteurs ne sont activés que pour compenser une non-surveillance par le conducteur et donc ne sont activés qu'au minimum.

Selon encore un premier mode de mise en œuvre particulier de l'invention, les événements détectés sont catégorisés et une information représentative d'une alerte est restituée en cas d'imminence d'un événement selon sa catégorie.

Grâce à ce premier mode de mise en œuvre, le procédé va s'appuyer sur des scénarios prédéfinis d'événements routiers pour déterminer si des événements détectés par les capteurs dans la zone non surveillée méritent effectivement de restituer une information représentative d'une alerte, ou plus simplement de déclencher une alerte ou non en fonction de l'imminence d'un événement catégorisé. Par exemple, un objet peut arriver à un croisement vers le véhicule automobile dans la zone non surveillée par le conducteur et suivant la nature de l'objet et la nature du croisement, une alerte pourra être déclenchée. De cette manière, le procédé se limite aux alertes pertinentes. Le procédé peut à l'inverse indiquer qu'il n'y a pas d'alerte en provenance des zones non surveillées.

Selon un deuxième mode de mise en œuvre particulier de l'invention, le véhicule automobile est connecté à un réseau de communication, et le procédé comprend une étape supplémentaire de transmission d'une information représentative d'une alerte via le réseau de communication à destination de véhicules connectés concernés par l'événement.

Dans ce deuxième mode de réalisation, le véhicule concerné par le procédé d'alerte du conducteur est connecté à un réseau de communication. De cette manière, le procédé permet de diffuser l'alerte au-delà du véhicule concerné initialement. Le procédé peut utiliser une diffusion de proche en proche qui va adresser l'information représentative de l'alerte à des véhicules proches via des moyens de communication directs V2X (acronyme pour l'expression en anglais *vehicle to eveything*), lesdits véhicules proches étant potentiellement concernés par l'alerte, ou bien peut utiliser une transmission vers un serveur central de supervision qui va ensuite répercuter l'information représentative de l'alerte à des véhicules connectés que le serveur supervise et qu'il détermine être potentiellement concernés.

Selon un troisième mode de mise en œuvre particulier de l'invention, qui pourra être mis en œuvre alternativement ou cumulativement avec les modes précédents, le procédé comprend une étape de détermination d'une zone dite de surveillance, que surveille le conducteur, et l'information restituée consiste en un stimulus dans la zone de surveillance indiquant au conducteur une alerte ou une absence d'alerte en provenance de la zone non surveillée obtenue.

Grâce à ce mode de réalisation, dans lequel une zone de surveillance est effectivement déterminée, l'information est restituée au conducteur directement dans la zone dite de surveillance, à savoir celle qu'il surveille. De cette manière, le conducteur pourra réagir de façon pertinente à l'information restituée sans avoir à porter son attention sur une zone différente. De cette manière, le temps de réaction du conducteur est le plus court possible. Le conducteur pourra réagir à l'information restituée en ayant une action de conduite, par exemple en freinant, même sans changer la direction de son attention.

Le stimulus peut ne pas contenir d'alerte. L'information restituée dans ce cas au conducteur lui permettra alors de savoir qu'il y a une zone qu'il ne surveille pas, ce qui est une information pertinente en elle-même, et également qu'il n'y a pas d'événement imminent à attendre en provenance de cette zone non surveillée. Ce mode de réalisation peut permettre de réaliser une surveillance permanente d'une zone donnée par un moyen automatique. Le conducteur va alors savoir qu'une zone donnée n'a pas à être surveillé par lui-même, mais que, si un événement d'une catégorie particulière va survenir dans la zone non surveillée de façon imminente, il sera alors alerté.

Selon un quatrième mode de mise en œuvre particulier de l'invention, qui pourra être mis en œuvre alternativement ou cumulativement avec les précédents modes, l'information restituée consiste en un stimulus attirant l'attention du conducteur vers la zone non surveillée obtenue.

Grâce à ce mode de mise en œuvre particulier de l'invention, l'alerte va permettre au conducteur de réagir de façon pertinente à l'événement détecté en allant porter son attention sur la zone non surveillée. Le conducteur va alors réagir et son action sur les systèmes de conduite permettra d'augmenter les chances d'évitement du danger imminent. De cette manière, on obtient un effet similaire aux systèmes d'évitement d'accident proposés dans les véhicules autonomes sans avoir à introduire une intégration directe d'un système de décision avec les organes de conduite de la voiture. Une telle intégration directe n'est pas possible avant longtemps au vu de la flotte actuelle des véhicules automobiles et serait très chère pour les utilisateurs, acheteurs et conducteurs de véhicules automobiles.

Selon l'invention, l'obtention d'une zone non surveillée prend en compte le niveau d'attention du conducteur, de telle manière que plus le niveau d'attention est faible, plus la zone non surveillée obtenue est grande.

Grâce à ce mode, le procédé utilise une information qui est maintenant couramment accessible, à savoir une estimation du niveau d'attention du conducteur, pour affiner les alertes potentiellement déclenchées par le procédé en délimitant de façon plus précise la zone non surveillée par le conducteur.

Dans des modes de réalisation, ce mode va utiliser la détermination d'une zone de surveillance, et plus le niveau d'attention du conducteur sera faible, plus la zone de surveillance déterminée sera petite et de façon complémentaire, la zone non surveillée sera grande. Un mode de réalisation peut considérer que l'angle de vision du conducteur diminue avec le niveau d'attention. Pour une direction observée du regard du conducteur, si le niveau d'attention diminue, alors, l'angle de vision diminue également, et la zone de surveillance déterminée diminue également.

Dans des modes de réalisation, ce mode s'applique directement lors de l'obtention d'une zone non surveillée. Un mode de réalisation peut considérer que, quand le niveau d'attention du conducteur diminue, une zone va être dite non surveillée à partir d'une durée courte depuis la dernière fois que le conducteur a porté son regard sur cette zone.

Selon un mode de mise en œuvre particulier de l'invention, la détermination d'une zone de surveillance prend en compte le niveau d'attention du conducteur, de telle manière que plus le niveau d'attention est faible, plus la zone de surveillance déterminée est petite.

Selon un cinquième mode de mise en œuvre particulier de l'invention, qui pourra être mis en œuvre cumulativement avec les modes précédents, la restitution d'une information représentative d'une alerte au conducteur prend en compte le niveau d'attention du conducteur, de telle manière que plus le niveau d'attention est faible, plus l'information représentative est restituée précocement.

Grâce à ce mode, le procédé prend en compte le temps de réaction du conducteur, qui est diminué quand son attention baisse, dans le processus de restitution d'une information représentative de l'alerte.

Selon un premier aspect matériel, l'invention se rapporte à une entité de gestion gérant un procédé d'alerte du conducteur d'un véhicule automobile caractérisée en ce qu'elle comprend les modules suivants :
- Un module d'obtention d'une zone non surveillée par le conducteur et d'activation de capteurs du véhicule relativement à la zone non surveillée ;
- Un module d'analyse des données captées par les capteurs relativement à la zone non surveillée pour détecter un événement donné ;
- Un module de restitution d'une information représentative d'une alerte si un événement est détecté par le module d'analyse.

Selon l'invention, l'obtention d'une zone non surveillée prend en compte le niveau d'attention du conducteur, de telle manière que plus le niveau d'attention est faible, plus la zone non surveillée obtenue est grande.

Selon un deuxième aspect matériel, l'invention se rapporte à un dispositif comprenant l'entité de gestion visée ci-dessus.

Le dispositif pourra alors avantageusement être embarqué par exemple dans un véhicule automobile.

Selon un autre aspect matériel, l'invention a trait à un programme d'ordinateur apte à être mis en œuvre par une entité de gestion, le programme comprenant des instructions de code qui, lorsqu'il est exécuté par un processeur, réalise les étapes du procédé d'alerte défini ci-dessus.

Enfin, selon un autre aspect matériel, l'invention a trait à un support de données sur lequel est enregistré un programme d'ordinateur comprenant une séquence d'instructions pour la mise en œuvre du procédé d'alerte défini ci-dessus lorsqu'il est chargé dans et exécuté par un processeur.

Les supports de données peuvent être n'importe quelle entité ou dispositif capable de stocker les programmes. Par exemple, les supports peuvent comporter un moyen de stockage, tel qu'une ROM, par exemple un CD ROM ou une ROM de circuit microélectronique, ou encore un moyen d'enregistrement magnétique tel qu'un un disque dur. D'autre part, les supports peuvent être des supports transmissibles tels qu'un signal électrique ou optique, qui peuvent être acheminés via un câble électrique ou optique, par radio ou par d'autres moyens. Les programmes selon l'invention peuvent être en particulier téléchargés sur un réseau de type Internet. Alternativement, le support d'informations peut être un circuit intégré dans lequel le programme est incorporé, le circuit étant adapté pour exécuter ou pour être utilisé dans l'exécution du procédé en question.

L'invention sera mieux comprise à la lecture de la description qui suit, donnée à titre d'exemple, et faite en référence aux dessins annexées sur lesquels :
[Fig 1] représente un véhicule automobile comprenant un dispositif incluant une entité de gestion selon l'invention, ainsi qu'un conducteur et des zones surveillées et non surveillées par le conducteur.
[Fig 2] illustre un exemple d'étapes mises en œuvre dans le cadre d'un mode de réalisation de l'invention.
[Fig 3] illustre une situation de mise en œuvre de l'invention au niveau d'un croisement routier.

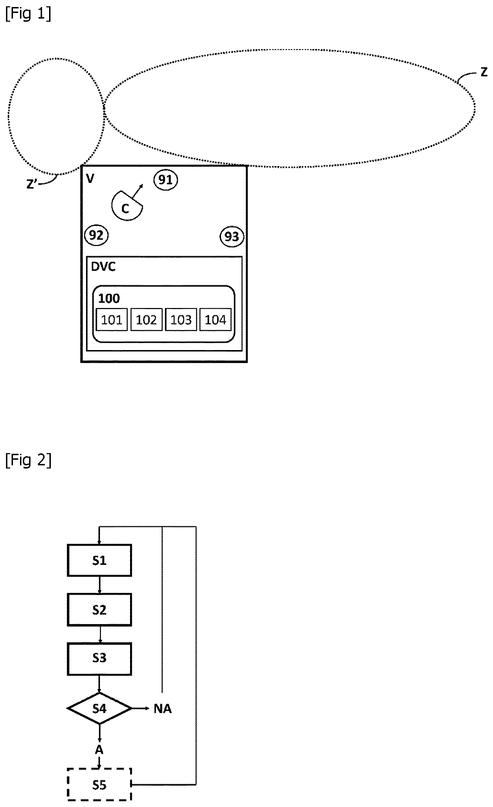

La figure 1 représente un véhicule automobile V.

Celui-ci embarque un dispositif DVC qui comprend lui-même une entité de gestion 100. L'entité de gestion 100 est formée de quatre modules 101, 102, 103 et 104. Le véhicule V comprend par ailleurs des capteurs 91, 92 et 93. Le conducteur C du véhicule automobile V est représenté également. La flèche indique la direction de son regard à un moment donné.

Le véhicule automobile V sera le plus souvent une voiture individuelle. Cependant, l'invention peut également s'appliquer à d'autres véhicules, comme un autobus, une camionnette ou à un camion. En général, l'invention s'appliquera mieux à un véhicule automobile V qui dispose d'une cabine pour son conducteur C. On peut cependant imaginer certains modes de réalisation de l'invention s'appliquant à des véhicules routiers sans cabine tels que des motocyclettes. De même, dans certains modes de réalisation de l'invention, le véhicule V ne sera pas un véhicule automobile mais pourra être un navire ou un véhicule ferroviaire voire un aéroplane.

Un point important est que le véhicule automobile V ne dispose pas de capacités de conduite autonome de niveau élevés, à savoir qu'il n'y a pas de liaison directe entre un organe de calcul tel que le dispositif DVC ou l'entité de gestion 100 et les organes de conduite du véhicule V tels que la direction, l'accélération ou le système de freinage. Ces capacités peuvent dans certains cas être présentes dans le véhicule V mais ne pas être activées, ce qui actuellement est fréquemment le cas ; ou encore tout ou partie de ces capacités peuvent être présentes mais ne pas couvrir l'ensemble des utilisations couvertes par la présente demande. Par exemple, les capacités de conduite autonome présentes dans le véhicule V sont limitées à des cas particuliers tels que l'assistance au recul ou au garage automatique. Toute action de conduite du véhicule automobile V va nécessairement être effectuée par le conducteur C, ou en tout état de cause les actions de conduite correspondant à tout ou partie des scénarios couverts par la présente demande. Et par conséquent, dans de tels cas, une action de conduite visant à éviter un danger imminent devra également être effectuée par le conducteur C lui-même.

Il est à noter que l'ajout de capacités de conduite autonome à un véhicule V n'en disposant pas est possible mais à un coût très élevé. En effet, l'intégration d'un organe de conduite non prévu pour cela avec un organe de décision n'est pas aisée.

En revanche, il est maintenant courant pour un véhicule automobile V, même ne disposant pas de capacités de conduite autonome, de disposer de capteurs 91, 92 et 93 comme présenté sur la figure 1. Ces capteurs 91, 92, 93 peuvent être des caméras, mais aussi, dans des versions plus sophistiquées, des capteurs radar ou lidar. On peut également envisager l'utilisation de capteurs sonores (des écouteurs). Mais ce sont surtout les caméras qui présentent le meilleur rapport qualité-prix en terme de capacité de surveillance d'événements pour un coût faible. On a donc vu se généraliser l'utilisation de caméras comme capteurs 91, 92, 93 même sur des véhicules automobiles de gamme moyenne, utilisés par exemple pour surveiller l'arrière d'un véhicule V en cas de marche arrière, ou pour des véhicules autonomes de niveau 1 ou 2.

Le véhicule automobile V embarque un dispositif DVC. Celui-ci présente l'architecture matérielle d'un ordinateur conventionnel. Il comporte notamment un processeur, une mémoire vive de type RAM et une mémoire morte telle qu'une mémoire de type Flash, ROM, (non représentés sur la figure). Le dispositif DVC peut être par exemple l'ordinateur de bord du véhicule V qui remplit par ailleurs des fonctions de navigation ou de centre multimédia. Dans ce cas, le dispositif DVC sera relié à l'ensemble des capteurs 91, 92, 93 du véhicule V et pourra récupérer les données captées par les capteurs 91, 92, 93 lors de la mise en œuvre du procédé d'alerte par l'entité de gestion 100. Le dispositif DVC peut être aussi un équipement indépendant du véhicule automobile V, acheté séparément de celui-ci. Dans ce cas, le dispositif DVC peut être livré avec un ensemble de capteurs 91, 92, 93 que l'utilisateur disposera afin de rendre possible la mise en œuvre du procédé d'alerte par l'entité de gestion 100. On a vu précédemment que le coût des capteurs 91, 92, 93 tels que des caméras était maintenant assez faible pour être vendus en kit avec un dispositif DVC à un prix raisonnable.

Dans un mode de réalisation, le dispositif DVC peut être un ordiphone, par exemple celui du conducteur C. L'entité de gestion 100 peut être alors une application dédiée, téléchargée par le conducteur C dans le dispositif DVC. Dans ce mode de réalisation, l'ordiphone devra pouvoir ou bien se connecter avec des capteurs 91, 92, 93 déjà présents dans le véhicule V, ou bien l'utilisateur devra acheter des capteurs 91, 92, 93 et connecter le dispositif DVC, qui est un ordiphone, aux capteurs 91, 92, 93 pour que l'entité de gestion 100, qui est une application, puisse mettre en œuvre le procédé d'alerte.

La connexion entre le dispositif DVC et les capteurs 91, 92, 93 peut être par exemple une connexion filaire, quand le dispositif DVC et les capteurs 91, 92, 93 sont intégrés dès l'origine au véhicule V. Mais dans les modes de réalisation dans lesquels le dispositif DVC ou bien les capteurs 91, 92, 93 sont, partiellement ou en totalité, rajoutés par l'utilisateur au véhicule V, une liaison sans fil telle qu'une connexion Bluetooth ou WiFi ou autre pourra être utilisée avantageusement.

Le dispositif DVC comprend une entité de gestion 100 qui va mettre en œuvre le procédé d'alerte selon l'invention. Dans notre exemple de réalisation représenté dans la figure 1, l'entité de gestion 100 comprend des modules 101, 102, 103 et 104. Signalons ici que, dans le présent texte, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.

Les modules 101, 102, 103 et 104 de notre exemple vont mettre en œuvre des étapes successives S1, S2, S3 et S4 du procédé d'alerte donnant lieu à l'invention.

Dans notre exemple, le module de détermination 101 met en œuvre l'étape S1 de détermination d'une zone de surveillance Z que surveille le conducteur C. Pour cela, le module de détermination 101 doit disposer de données remontées par un ou plusieurs capteurs parmi les capteurs 91, 92, 93 qui est orienté vers le conducteur C. Ce ou ces capteurs parmi les capteurs 91, 92, 93 orienté vers le conducteur C va remonter au module 101 des données relatives au visage du conducteur C. De façon la plus fréquente, le capteur utilisé parmi les capteurs 91, 92, 93 sera une caméra et les données captées par celui-ci sont des images. De façon classique, des algorithmes de traitement d'image permettent alors au module 101 de réaliser plusieurs traitements qui vont permettre par exemple d'identifier le au moins un œil du conducteur C. Ceci permet ensuite au module de détermination 101 de déterminer la direction du regard du conducteur C, représentée sur la figure 1 par une flèche. Elle permet de déterminer durant l'étape S1, à un instant donné, une zone surveillée Z.

Cette direction du regard du conducteur C va bien sûr évoluer avec le temps. Quand le regard du conducteur C quitte une zone, cette zone qui vient d'être quittée par le regard du conducteur C va rester dans la zone surveillée Z telle que déterminée à l'étape S1 par le module de détermination 101 pendant un certain temps qui va dépendre de plusieurs conditions.

Un exemple de ces conditions peut être la nature de la voie où se trouve le véhicule V et que surveille le conducteur C. Sur une route de circulation à grande vitesse, la surveillance d'une zone Z par le conducteur C va être rapidement obsolète, et elle devra donc être renouvelée rapidement par le regard du conducteur C pour que la zone Z soit bien une zone de surveillance que surveille le conducteur C. A contrario, dans une circulation à faible vitesse, un regard du conducteur C conférera le caractère de zone de surveillance à la zone Z pendant une durée plus longue.

Les conditions de l'environnement, telles que des conditions météorologiques (présence de brouillard ou de pluie), des conditions horaires (est-on le jour ou la nuit ?), des conditions d'éclairage, peuvent également être utilisées. En effet, selon la distance de visibilité qu'a le conducteur C, son regard conférera la qualité de zone de surveillance à une zone Z pour une durée plus ou moins longue, et le conducteur C devra renouveler plus fréquemment son attention sur une zone Z pour qu'elle soit bien une zone de surveillance Z déterminée par l'étape S1.

Dans un mode de réalisation, les données du capteur parmi les capteurs 91, 92, 93 qui sont utilisées pour déterminer la direction du regard du conducteur C sont également utilisées pour déterminer le niveau d'attention du conducteur C.

Déterminer le niveau d'attention du conducteur C est une action bien connue dans l'état de la technique. Plusieurs approches existent, qui utilisent principalement une analyse d'images des yeux du conducteur C. En particulier, les approches analysent la fréquence de clignement des yeux, ainsi que les changements apparents sur le mouvement des paupières, dans l'approche dite PERCLOS. Cette analyse du mouvement des paupières permet de rajouter à l'information de la fréquence du clignement une information sur la durée de fermeture des yeux du conducteur C lors des clignements, et donc une estimation de la lourdeur des paupières du conducteur C. D'autres analyses s'appuient sur un calcul de la fréquence de bâillement et une estimation de la position de la tête. Les données qui permettent au module 101 de mettre en œuvre l'étape S1 de détermination d'une zone de surveillance que surveille le conducteur C, qui sont en général des images du visage du conducteur C, peuvent donc être utilisées pour ces analyses de calcul de la fréquence de bâillement et d'estimation de la position de la tête du conducteur C.

Une fois que le niveau d'attention du conducteur C est déterminé, cette donnée peut être utilisée, dans un mode de réalisation de l'étape de détermination S1 par le module 101 pour affiner la détermination de la zone de surveillance Z que surveille le conducteur C. Le niveau d'attention du conducteur C est alors une condition supplémentaire qui influence la durée pendant laquelle une zone va être déterminée comme zone de surveillance Z après que le regard du conducteur C ait quitté la zone en question, et aussi la durée pendant laquelle le conducteur C doit regarder une zone pour que lui soit conférée la qualification de zone de surveillance Z.

Dans ce mode de réalisation, le seuil d'attention du conducteur C est utilisé comme les autres conditions pour faire varier le temps qui est jugé suffisant pour que le fait que le conducteur C ait porté son regard vers une zone suffise à conférer à cette zone la qualité de zone de surveillance Z. Autrement dit, quand le niveau d'attention du conducteur C est élevé, la zone sur laquelle s'est porté le regard du conducteur C sera considérée comme zone de surveillance Z pendant une durée assez longue après que le conducteur C ait détourné son regard. Et par ailleurs, quand le niveau d'attention du conducteur C est élevé, il suffit au conducteur C de porter son regard vers une zone donnée pendant une durée courte pour que cette zone soit considérée comme zone de surveillance Z.

Ces deux relations sont bien sûr inversées quand le niveau d'attention du conducteur C est déterminé comme étant faible.

Outre la prise en compte des durées de surveillance, le niveau d'attention permet également d'affiner la surface de ladite zone de surveillance Z. En effet, il a été démontré dans l'état de l'art qu'une baisse de vigilance est corrélée avec une baisse de l'angle de vue surveillée, donc de la surface de la zone de surveillance Z. Autrement dit, dans ce mode de réalisation, plus le niveau d'attention du conducteur C est faible, plus la zone de surveillance Z déterminée par le module 101 lors de l'étape S1 est petite.

Il est important également de noter que l'étape S1 de détermination d'une zone de surveillance Z que surveille le conducteur C ne s'appuie pas uniquement sur la direction que prend le regard du conducteur C mais prend également en compte la présence de dispositifs de surveillance tiers du véhicule, tels que, par exemple non exhaustif, des rétroviseurs au sein de la cabine du véhicule V ou à l'extérieur de cette cabine, ou encore d'un affichage au niveau du tableau de bord de prises de vue ou de représentations équivalentes issues de caméras positionnées par exemple non exhaustif à l'arrière du véhicule.

La zone de surveillance Z peut donc comprendre des zones situées à l'arrière du véhicule V quand le regard du conducteur C se porte sur un ou plusieurs de ces dispositifs, tels qu'un rétroviseur par exemple. Là encore, les conditions d'environnement ou d'attention du conducteur C vont influer sur le temps que le regard du conducteur C doit porter sur le ou les rétroviseurs pour que la zone concernée soit incluse dans la zone de surveillance Z, ainsi que la durée pendant laquelle un regard sur un rétroviseur confère la qualité de zone de surveillance Z à une zone donnée.

Le module 102 d'obtention met en œuvre l'étape S2 d'obtention d'une zone non surveillée Z' par le conducteur C.

Cette étape S2 d'obtention peut s'appuyer sur la zone de surveillance Z qui a été déterminée lors de l'étape S1. Par exemple, la zone non surveillée Z' est la zone complémentaire de la zone de surveillance Z que surveille le conducteur C déterminée à l'étape S1. Dans d'autres exemples, l'obtention de la zone non surveillée Z' se fait sans déterminer une zone de surveillance Z. Par exemple, le procédé peut considérer que l'ensemble des zones autour du véhicule font partie de la zone non surveillée Z' et celle-ci est diminuée lorsque les capteurs 91, 92, 93 observent que le conducteur C porte son regard dans une direction donnée. Les conditions environnementales et le niveau d'attention du conducteur C sont alors utilisés de telle manière que plus le niveau d'attention du conducteur est faible, plus la zone non surveillée Z' est grande. Cette relation peut être obtenue en considérant que le regard du conducteur C, quand le conducteur C a un niveau d'attention faible, doit être porté plus fréquemment sur un endroit donné pour retirer cet endroit de la zone non surveillée Z'. Cette relation peut aussi être obtenue en considérant que le regard du conducteur C, quand le conducteur C a un niveau d'attention faible, permet de retirer de la zone non surveillée Z' un endroit donné plus restreint, car l'angle de vision du conducteur C est plus étroit quand son niveau d'attention est faible. Dans tous les cas, il est possible d'utiliser les conditions environnementales ou celles relatives à l'attention du conducteur C ou les deux catégories de conditions conjointement, pour affiner l'étape d'obtention S2 de la zone non surveillée Z', dans une manière inverse de celle dont ces conditions seraient utilisées pour déterminer la zone de surveillance Z.

Dans certains modes de réalisation, la zone non surveillée Z' n'est pas exactement complémentaire d'une zone surveillée Z. Par exemple, la zone non surveillée Z' peut être obtenue en prenant en compte des contraintes de sécurité routière qui font que, même si l'observation du conducteur indique qu'il surveille un endroit donné, cet endroit sera considéré comme faisant partie de la zone non surveillée Z' pour s'assurer que les capteurs couvrant cet endroit seront bien activés afin de chercher à détecter des événements potentiellement dangereux survenant à cet endroit.

L'étendue de ladite zone non surveillée Z' peut également dépendre de scénarios ou cas d'usage dans lesquels se positionne ou va se positionner le véhicule V en dépendance de sa trajectoire et de sa vitesse de déplacement. Par exemple, les zones de surveillance Z potentielles d'un véhicule V en déplacement sur une route nationale seront l'avant, l'arrière et éventuellement la gauche du véhicule si un véhicule tiers est en train de dépasser ledit véhicule A. Auquel cas, si la zone de surveillance Z déterminée à l'étape S1 correspond à l'avant et à la gauche du véhicule V, la zone à surveiller Z' correspondra à l'arrière du véhicule V.

Selon un autre exemple, les zones de surveillance Z potentielles d'un véhicule V arrêté à un croisement seront l'avant, l'arrière, la droite et la gauche du véhicule V. Auquel cas, si la zone de surveillance Z déterminée à l'étape S1 correspond à la droite et l'avant du véhicule V, la zone non surveillée Z' correspondra à l'arrière et la gauche du véhicule V.

Une fois la zone non surveillée Z' obtenue, le module 102 d'obtention va activer, si nécessaire, des capteurs 91, 92, 93 relativement à la zone non surveillée Z'. Il est possible que les capteurs 91, 92, 93 soient activés en permanence. L'objectif est bien sûr ici d'obtenir des données relatives aux événements qui peuvent survenir dans la zone non surveillée Z' et qui peuvent donc échapper à la surveillance du conducteur C. Les capteurs 91, 92, 93 peuvent être des caméras, qui sont disponibles pour un coût réduit, mais également des capteurs radar ou lidar, voire des capteurs sonores dans certains modes de réalisation. Les capteurs 91, 92, 93 peuvent être intégrés dans le véhicule V dès sa construction ou bien avoir été rajoutés ultérieurement, par exemple à l'occasion de l'installation d'un dispositif DVC non prévu initialement dans le véhicule V.

Dans le cas où ledit véhicule V serait connecté, les données captées peuvent en outre être complémentées par des données communiquées par d'autres véhicules proches via des moyens de communication direct V2X (acronyme pour *vehicle to everything*) ou bien par un serveur central de supervision répercutant différentes données aux véhicules d'un périmètre donné. Le dispositif DVC peut ainsi inclure un moyen permettant de récupérer et interpréter tout ou partie des données réceptionnées par le véhicule.

Le module 103 d'analyse des données met en œuvre l'étape S3 d'analyse des données captées par les capteurs 91, 92, 93 relativement à la zone non surveillée Z'.

Le module 103 va utiliser des algorithmes bien connus de traitement d'image, dans le cas où les capteurs 91, 92, 93 sont des caméras, et plus généralement des algorithmes de traitement du signal pour l'analyse de données radar ou lidar, voire sonores, selon la nature des capteurs 91, 92, 93. Ces algorithmes sont bien connus et ne sont pas détaillés plus avant ici. Ils permettent de détecter des événements à venir caractérisés par des données en provenance de la zone non surveillée Z'. Le point important est que les données analysées le sont en fonction de la zone non surveillée Z' et n'ont donc pas pu être perçues par le conducteur C du véhicule V. Il en va de même pour les éventuelles données réceptionnées par le véhicule, si le dispositif DVC inclut un moyen permettant de les récupérer.

L'activation des capteurs 91, 92, 93 relativement à la zone non surveillée Z' permet de garantir qu'une éventuelle alerte vient d'une zone non surveillée et ne va donc pas solliciter à tort le conducteur C et permet également d'économiser au maximum la consommation énergétique des capteurs 91, 92, 93.

Le module 104 de déclenchement va mettre en œuvre l'étape S4 de restitution ou pas au conducteur C d'une information représentative d'une alerte en fonction du résultat de l'étape S3 d'analyse des données.

L'étape S4 est celle qui permet au procédé d'alerte d'obtenir l'amélioration de sécurité désirée à bas coût puisque, grâce au procédé, une information représentative d'une alerte est restituée au conducteur C en rapport avec un événement à venir qui peut être déduit à partir de données issues de capteurs 91, 92, 93 recueillant des données dans la zone non surveillée Z'. Cette restitution peut aller jusqu'à déclencher une alerte. L'information restituée lors de l'étape S4 est donc pertinente car elle ne concerne pas la zone de surveillance Z déterminée dans notre exemple que surveille le conducteur C du véhicule V.

De plus, l'information restituée ou pas lors de l'étape S4 est à destination du conducteur C. Il ne s'agit donc pas d'une action directe sur les organes de conduite du véhicule V. Une telle action directe supposerait une intégration entre les organes de décision tels que l'ordinateur de bord du véhicule V ou le dispositif DVC et les organes de conduite (direction, accélération, freinage) du véhicule V. Cette intégration directe impliquerait une modification lourde et à coût élevé des véhicules existants V non autonomes, alors que l'ajout éventuel de capteurs 91, 92, 93 et du dispositif DVC pour bénéficier du procédé d'alerte et de l'amélioration concomitante de la sécurité est d'un coût faible. Notre procédé fonctionne toutefois également en présence de tels dispositifs préalablement intégrés dans le véhicule V, si ceux-ci ont été désactivés par le conducteur C ou tout autre.

Dans un mode de réalisation, l'étape S3 de détection des événements à venir est complétée par une catégorisation des événements détectés, et une information représentative d'une alerte est restituée lors de l'étape S4 en cas d'imminence d'un événement selon sa catégorie.

Dans ce mode de réalisation, des scénarios prédéfinis de situations dangereuses de conduite sont définis a priori et utilisés par le procédé d'alerte. L'utilisation de tels scénarios est bien connue par l'homme du métier dans le domaine de la conduite autonome. Un scénario dépend de la localisation du véhicule V dans le réseau routier. Par exemple, un scénario peut être le dépassement par le véhicule V d'un autre véhicule sur une voie express ou autoroute et la survenue d'un troisième véhicule plus rapide à l'arrière du véhicule V qui change de voie pour effectuer son dépassement. Un autre scénario peut être l'arrêt du véhicule V à un croisement où l'arrêt est obligatoire (croisement « STOP ») et la survenue d'un autre véhicule à vive allure sur la route prioritaire.

L'existence de scénarios prédéfinis permet de catégoriser les événements détectés lors de l'étape d'analyse des données S3 en vérifiant si ces événements correspondent à de tels scénarios. Par exemple, la détection d'un véhicule tiers se rapprochant du véhicule V sera catégorisée différemment si le véhicule V est à l'arrêt d'un croisement « STOP » et le véhicule tiers avance sur la voie prioritaire que si le véhicule V est sur une voie prioritaire et le véhicule tiers arrive sur une voie non prioritaire.

Dans ce mode de réalisation, le module 104 va donc aller jusqu'à déclencher une alerte ou pas lors de l'étape S4 selon la catégorie de l'événement détecté lors de l'étape S3, et selon l'imminence de sa survenue.

Le tempo de déclenchement de l'alerte selon notre invention dépend en outre du niveau d'attention du conducteur C. Il est en effet connu que le temps de réaction d'un conducteur est d'autant plus rapide que son niveau d'attention est élevé, et inversement. Auquel cas, le temps correspondant à l'imminence de la survenue d'une alerte sera augmenté quand le niveau de vigilance déterminé est faible, et donc l'alerte devra être déclenchée plus tôt afin de tenir compte de cette augmentation du délai de réaction du conducteur C.

De façon générale, l'invention consiste à ce que, lors de l'étape S4, une information représentative d'une alerte soit restituée par le module 104 pour inciter le conducteur C à avoir une réaction de conduite appropriée face à l'événement à venir détecté lors de l'étape S3 par analyse des données captées par les capteurs 91, 92, 93 relativement à la zone non surveillée Z'. Cette restitution d'information peut consister en le déclenchement d'une alerte. Une simple alerte sonore, un bruit significatif d'alerte émis dans la cabine de conducteur va inciter le conducteur C à reprendre des informations sur son environnement, à élever son niveau d'attention, et à prendre des actions de conduite de précaution, comme ne pas démarrer à un croisement, freiner, ou bien différer un changement de file. Ceci peut être vrai également avec une simple alerte visuelle, comme l'allumage d'une ampoule fixe ou clignotante, même sans indication de direction. Il est possible également d'envisager un stimulus tactile, comme une vibration dans le volant du conducteur C, ou bien un mélange de ces différents stimuli pour inciter le conducteur C à avoir une réaction de conduite appropriée face à l'événement à venir. On peut également envisager un stimulus olfactif qui indiquerait au conducteur C que la situation actuelle présente un danger.

De façon plus précise, dans un mode de réalisation particulier, l'alerte déclenchée lors de l'étape S4 mise en œuvre par le module 104 consiste en un stimulus attirant l'attention du conducteur C vers la zone non surveillée Z' obtenue lors de l'étape S2.

Là encore, le stimulus peut être une alerte sonore. Par exemple, un bruit d'alerte peut être émis, mais de façon localisée, pour inciter le conducteur C à porter son attention vers une zone précise. L'alerte sonore peut aussi être un message précis, indiquant au conducteur C vers quelle zone non surveillée Z' il doit porter son attention.

Un stimulus visuel peut avantageusement être utilisé. Selon un premier exemple, une ampoule, clignotante ou non, situé dans la direction de la zone non surveillée Z', pourra attirer l'attention du conducteur C vers celle-ci. Il sera également possible d'utiliser une rampe d'ampoules. L'allumage décalé des différentes ampoules attirera l'attention du conducteur vers une zone non surveillée Z' selon un effet bien connu, utilisé par exemple pour diriger les passagers d'un avion en cas d'évacuation d'urgence.

Il est possible également d'utiliser des signaux lumineux en forme de flèche. Le stimulus sera alors activé dans une zone de surveillance Z déterminée dans notre exemple que surveille le conducteur C, pour être sûr d'être visible, la flèche indiquant vers où l'attention du conducteur C doit se porter.

Une fois l'attention du conducteur C portée vers la zone non surveillée Z', le conducteur C aura une réaction de conduite appropriée face à l'événement à venir détecté lors de l'étape S3 d'analyse des données captées par les capteurs 91, 92, 93.

Toutefois, le temps de réaction du conducteur C est augmenté par le temps de réaction nécessaire pour porter sa surveillance d'une zone de surveillance Z vers une autre.

Selon un autre mode de réalisation, le stimulus est de type lumineux et est activé dans la zone de surveillance Z vers laquelle porte le regard du conducteur C lors de la restitution de l'information représentative d'une alerte.

La restitution de cette information représentative d'une alerte lors de l'étape S4 par un stimulus visuel vise à permettre au conducteur C à avoir une réaction de conduite appropriée, et ce sans qu'il ait à reporter son attention sur une autre zone, ce qui nécessiterait un temps de réaction complémentaire.

Dans un mode de réalisation, le dispositif restituant l'information par un stimulus visuel peut utiliser plusieurs couleurs, comme un feu à diodes tricolore de mêmes couleurs que les feux de circulation routière. Un tel dispositif permettra au conducteur C portant son attention dans une direction d'avoir connaissance d'une absence de danger sur les zones non surveillées Z' par un signal vert et donc de prendre les décisions en toute certitude en fonction de la zone de surveillance Z, d'un danger potentiel non imminent par un signal orange et d'un danger imminent sur la zone non surveillée Z' par un signal rouge.

Ainsi par exemple, un conducteur C de véhicule V arrivant sur une intersection et regardant à droite serait prévenu d'une absence de danger en provenance de la gauche (signal vert), d'un danger potentiel dans quelques secondes s'il met trop de temps à réagir (signal orange) ou d'un danger imminent, ceci sans avoir à reporter son attention sur la gauche. On peut assimiler ce type de dispositif DVC embarqué aux miroirs positionnés sur certains croisement à visibilité réduite, qui permettent en regardant dans une seule direction et sans avoir à tourner la tête, ce qui prend trop de temps pour manœuvrer en toute sécurité, de visualiser les dangers en provenance d'une autre direction.

Selon un mode de réalisation, plusieurs dispositifs lumineux de ce type sont disposés dans l'habitacle de sorte que l'un d'entre eux soit toujours visible par le conducteur C quelle que soit la direction de son regard. Dans cette configuration, quand le conducteur C change la direction de son regard, le dispositif lumineux positionné dans la direction précédente du regard du conducteur C s'éteint et au moins un des dispositifs lumineux maintenant visible par le conducteur C s'allume avec le code lumineux préalablement présenté.

La figure 2, quant à elle, illustre un exemple d'étapes mises en œuvre dans le cadre d'un mode de réalisation de l'invention.

Comme vu précédemment, le procédé selon l'invention débute dans notre exemple par une étape S1 de détermination d'une zone de surveillance Z que surveille le conducteur C. Le procédé se poursuit par une étape d'obtention S2 d'une zone non surveillée Z' par le conducteur C et d'activation de capteurs 91, 92, 93 du véhicule V, V' relativement à la zone non surveillée Z'. Le procédé se poursuit par une étape d'analyse S3 des données captées par les capteurs 91, 92, 93 relativement à la zone non surveillée Z' pour détecter un événement à venir.

L'étape suivante est une étape de restitution S4 ou pas au conducteur C d'une information représentative d'une alerte en fonction du résultat de l'étape d'analyse S3. Sur la figure 2, l'étape S4 est donc représentée par un choix entre deux alternatives de restitution ou pas d'une information représentative d'une alerte.

La branche NA est l'alternative dans laquelle une information représentative d'une alerte n'est pas restituée. Dans ce cas, le procédé se poursuit par un retour à l'étape S1 de détermination présente dans notre exemple.

Dans la branche A, une information est restituée selon un mode de réalisation discuté ci-dessus.

Dans un mode de réalisation, le véhicule V' est connecté à un réseau de communication N et le procédé comprend une étape supplémentaire S5 de transmission d'une information représentative d'une alerte via le réseau de communication N à destination de véhicules connectés concernés par l'événement. Dans la figure 2, cette étape S5 est indiquée dans un rectangle en pointillés pour bien indiquer que cette étape ne peut s'appliquer que pour un véhicule V' connecté à un réseau de communication N.

L'étape de transmission S5 peut être réalisée de deux manières. Le véhicule V' connecté à un réseau de communication N peut adresser l'information représentative d'une alerte à un serveur de supervision S, non représenté sur les figures. Celui-ci maintient une liste de véhicules connectés géolocalisés. Le serveur de supervision S peut alors adresser l'information aux véhicules connectés proches du véhicule connecté N, car l'information que le conducteur C du véhicule V' ne surveille pas la zone Z' peut être une information pertinente pour un véhicule connecté proche. Ce véhicule connecté peut disposer de capacités de conduite autonome, et dans ce cas l'information transmise pourra par exemple se traduire en une action autonome de conduite, comme une réduction de la vitesse. Sinon, l'information peut être transmise au conducteur de ce véhicule connecté.

Dans un autre mode de réalisation, le véhicule V' connecté à un réseau de communication N va directement adresser l'information représentative de l'alerte à des véhicules connectés proches selon un modèle de diffusion. Ce type de transmission de l'alerte par diffusion est bien connu de l'homme du métier, utilisant par exemple la technologie V2X (acronyme pour *vehicle-to-everything*) et n'est pas développé plus avant.

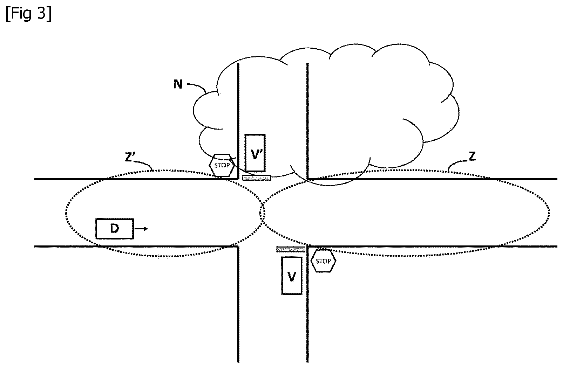

La figure 3, quant à elle, illustre une situation de mise en œuvre de l'invention au niveau d'un croisement routier.

Ce croisement routier est un croisement STOP, comme indiqué par les deux représentations de panneaux routiers indiquées sur la figure, ainsi que par les deux bandes pleines peintes sur la chaussée, également indiquées sur la figure. Deux véhicules V, V' sont arrêtés à ce croisement STOP. Le véhicule V' est connecté à un réseau de communication N, ce qui n'est pas le cas du véhicule V.

L'étape S1 a déterminé dans notre exemple une zone de surveillance Z que surveille le conducteur C du véhicule V. L'étape S2 a ensuite obtenu une zone non surveillée Z' par le conducteur C du véhicule, et, conséquemment, des capteurs 91, 92, 93, non représentés sur la figure 3, ont été activés relativement à la zone non surveillée Z'. Dans d'autres modes de réalisation, la zone non surveillée Z' est obtenue directement sans avoir à déterminer une zone de surveillance Z. L'étape S3 d'analyse des données captées par les capteurs 91, 92, 93 relativement à la zone non surveillée Z' va ainsi permettre de détecter un événement à venir, à savoir l'arrivée vers le croisement du véhicule D représenté sur la figure 3, la flèche indiquant sa direction de déplacement. L'étape S4 de restitution d'une information représentative d'une alerte va donc restituer une information à ce sujet, ce qui ira dans cette situation jusqu'à déclencher une alerte à destination du conducteur C du véhicule V, par exemple par l'intermédiaire d'un stimulus sonore ou visuel ou autre. La catégorisation de l'événement d'arrivée du véhicule D vers le croisement le placera de façon évidente dans la catégorie des événements présentant un danger imminent, au vu de la non-surveillance de la zone Z' par le conducteur C du véhicule V.

Si les zones Z et Z' correspondent aux zones respectivement de surveillance et non-surveillée pour le conducteur du véhicule V', l'étape S4 de restitution d'une information représentative d'une alerte peut être complétée, dans un mode de réalisation, par une étape S5 de transmission d'une information représentative d'une alerte via le réseau de communication N à destination de véhicules connectés concernés par l'événement. Par exemple, dans la situation de la figure 3, le véhicule D pourrait être connecté au réseau de communication N, et recevoir une information transmise par le procédé depuis le véhicule V' qui indiquerait une perte d'attention de la part du conducteur du véhicule V'. Cette information transmise pourrait alors ou bien avoir une action directe sur la conduite, par exemple une diminution de la vitesse, si le véhicule D présente des capacités de conduite autonome, ou bien être restituée au conducteur du véhicule D pour l'alerter de la situation.

Signalons enfin ici que, dans le présent texte, le terme « module » peut correspondre aussi bien à un composant logiciel qu'à un composant matériel ou un ensemble de composants matériels et logiciels, un composant logiciel correspondant lui-même à un ou plusieurs programmes ou sous-programmes d'ordinateur ou de manière plus générale à tout élément d'un programme apte à mettre en œuvre une fonction ou un ensemble de fonctions telles que décrites pour les modules concernés. De la même manière, un composant matériel correspond à tout élément d'un ensemble matériel (ou hardware) apte à mettre en œuvre une fonction ou un ensemble de fonctions pour le module concerné (circuit intégré, carte à puce, carte à mémoire, etc.).

## Revendications

1. Procédé d'alerte du conducteur (C) d'un véhicule automobile (V, V') comprenant les étapes suivantes :
• Une étape (S2) d'obtention d'une zone (Z') non surveillée par le conducteur (C) et d'activation de capteurs (91, 92, 93) du véhicule (V, V') relativement à la zone (Z') non surveillée ;
• Une étape (S3) d'analyse des données captées par les capteurs (91, 92, 93) relativement à la zone (Z') non surveillée pour détecter un événement donné ;
• Une étape (S4) de restitution d'une information représentative d'une alerte si un événement est détecté lors de l'étape (S3) d'analyse ;
et **caractérisé en ce que** l'obtention d'une zone (Z') non surveillée prend en compte le niveau d'attention du conducteur (C), de telle manière que plus le niveau d'attention est faible, plus la zone (Z') non surveillée obtenue est grande.

2. Procédé d'alerte du conducteur (C) d'un véhicule automobile (V, V') selon la revendication 1 **caractérisé en ce que** les événements détectés (S3) sont catégorisés et une information représentative d'une alerte est restituée (S4) en cas d'imminence d'un événement selon sa catégorie.

3. Procédé d'alerte du conducteur (C) d'un véhicule automobile (V') selon l'une des revendications 1 ou 2 **caractérisé en ce que** le véhicule automobile (V') est connecté à un réseau de communication (N), et **en ce qu'**il comprend une étape supplémentaire (S5) de transmission d'une information représentative d'une alerte via le réseau de communication (N) à destination de véhicules connectés concernés par l'événement.

4. Procédé d'alerte du conducteur (C) d'un véhicule automobile (V, V') selon l'une des revendications 1 à 3 **caractérisé en ce que** le procédé comprend une étape (S1) de détermination d'une zone (Z) dite de surveillance, que surveille le conducteur (C) et **caractérisé en ce que** l'information restituée (S4) consiste en un stimulus dans la zone de surveillance (Z) indiquant au conducteur une alerte ou une absence d'alerte en provenance de la zone non surveillée (Z') obtenue (S2).

5. Procédé d'alerte du conducteur (C) d'un véhicule automobile (V, V') selon l'une des revendications 1 à 3 **caractérisé en ce que** l'information restituée (S4) consiste en un stimulus attirant l'attention du conducteur (C) vers la zone (Z') non surveillée obtenue (S2).

6. Procédé d'alerte du conducteur (C) d'un véhicule automobile (V, V') selon l'une des revendications 1 à 5 **caractérisé en ce que** la restitution (S') au conducteur (C) d'une information représentative d'une alerte prend en compte le niveau d'attention du conducteur (C), de telle manière que plus le niveau d'attention est faible, plus l'information représentative est restituée (S4) précocement.

7. Entité de gestion (100) gérant un procédé d'alerte du conducteur (C) d'un véhicule automobile (V, V') **caractérisée en ce qu'**elle comprend les modules suivants :
• Un module (102) d'obtention d'une zone (Z') non surveillée par le conducteur (C) et d'activation de capteurs (91, 92, 93) du véhicule (V, V') relativement à la zone (Z') non surveillée ;
• Un module (103) d'analyse des données captées par les capteurs (91, 92, 93) relativement à la zone (Z') non surveillée pour détecter un événement donné ;
• Un module (104) de restitution d'une information représentative d'une alerte si un événement est détecté par le module (103) d'analyse ;
**caractérisé en ce que** l'obtention d'une zone (Z') non surveillée prend en compte le niveau d'attention du conducteur (C), de telle manière que plus le niveau d'attention est faible, plus la zone (Z') non surveillée obtenue est grande.

8. Dispositif (DVC) comprenant une entité de gestion (100) telle que définie dans la revendication 7.

9. Programme d'ordinateur apte à être mis en œuvre par une entité de gestion (100) selon la revendication 7, le programme comprenant des instructions de code qui, lorsqu'il est exécuté par un processeur, réalise les étapes du procédé d'alerte selon la revendication 1.

10. Support de données sur lequel est enregistré un programme d'ordinateur selon la revendication 9 comprenant une séquence d'instructions pour la mise en œuvre du procédé d'alerte selon la revendication 1 lorsqu'il est chargé dans et exécuté par un processeur.

## Patentansprüche

1. Verfahren zur Warnung des Fahrers (C) eines Kraftfahrzeugs (V, V'), umfassend die folgenden Schritte:
• Einen Schritt (S2) des Ermittelns eines Bereichs (Z'), der von dem Fahrer (C) nicht überwacht wird, und des Aktivierens von Sensoren (91, 92, 93) des Fahrzeugs (V, V') bezüglich des nicht überwachten Bereichs (Z');
• Einen Schritt (S3) des Analysierens der von den Sensoren (91, 92, 93) bezüglich des nicht überwachten Bereichs (Z') erfassten Daten, um ein gegebenes Ereignis zu detektieren;
• Einen Schritt (S4) des Ausgebens einer für eine Warnung repräsentativen Information, wenn bei dem Schritt (S3) des Analysierens ein Ereignis detektiert wird;
und
**dadurch gekennzeichnet, dass** das Ermitteln eines nicht überwachten Bereichs (Z') das Aufmerksamkeitsniveau des Fahrers (C) berücksichtigt, so dass der nicht überwachte Bereich (Z') umso größer ist, je geringer das Aufmerksamkeitsniveau ist.

2. Verfahren zur Warnung des Fahrers (C) eines Kraftfahrzeugs (V, V') nach Anspruch 1, **dadurch gekennzeichnet, dass** die detektierten (S3) Ereignisse kategorisiert werden und eine für eine Warnung repräsentative Information im Fall des unmittelbaren Bevorstehens eines Ereignisses gemäß dessen Kategorie ausgegeben wird (S4).

3. Verfahren zur Warnung des Fahrers (C) eines Kraftfahrzeugs (V') nach einem der Ansprüche 1 oder 2, **dadurch gekennzeichnet, dass** das Kraftfahrzeug (V') mit einem Kommunikationsnetz (N) verbunden ist und dass es einen zusätzlichen Schritt (S5) des Übertragens einer für eine Warnung repräsentativen Information über das Kommunikationsnetz (N) an verbundene Fahrzeuge, die von dem Ereignis betroffen sind, umfasst.

4. Verfahren zur Warnung des Fahrers (C) eines Kraftfahrzeugs (V, V') nach einem der Ansprüche 1 bis 3, **dadurch gekennzeichnet, dass** das Verfahren einen Schritt (S1) des Bestimmens eines Bereichs (Z), Überwachungsbereich genannt, den der Fahrer (C) überwacht, umfasst, und **dadurch gekennzeichnet, dass** die ausgegebene Information (S4) in einem Reiz in dem Überwachungsbereich (Z) besteht, der dem Fahrer eine ermittelte (S2) Warnung oder ein Nichtvorliegen einer Warnung aus dem nicht überwachten Bereich (Z') anzeigt.

5. Verfahren zur Warnung des Fahrers (C) eines Kraftfahrzeugs (V, V') nach einem der Ansprüche 1 bis 3, **dadurch gekennzeichnet, dass** die ausgegebene (S4) Information in einem Reiz besteht, der die Aufmerksamkeit des Fahrers (C) auf den ermittelten (S2) nicht überwachten Bereich (Z') lenkt.

6. Verfahren zur Warnung des Fahrers (C) eines Kraftfahrzeugs (V, V') nach einem der Ansprüche 1 bis 5, **dadurch gekennzeichnet, dass** das Ausgeben (S') einer für eine Warnung repräsentativen Information für den Fahrer (C) das Aufmerksamkeitsniveau des Fahrers (C) berücksichtigt, so dass die repräsentative Information umso frühzeitiger ausgegeben (S4) wird, je geringer das Aufmerksamkeitsniveau ist.

7. Verwaltungsentität (100), die ein Verfahren zur Warnung des Fahrers (C) eines Kraftfahrzeugs (V, V') verwaltet, **dadurch gekennzeichnet, dass** sie die folgenden Module umfasst:
• Ein Modul (102) zum Ermitteln eines Bereichs (Z'), der von dem Fahrer (C) nicht überwacht wird, und zum Aktivieren von Sensoren (91, 92, 93) des Fahrzeugs (V, V') bezüglich des nicht überwachten Bereichs (Z');
• Ein Modul (103) zum Analysieren der von den Sensoren (91, 92, 93) bezüglich des nicht überwachten Bereichs (Z') erfassten Daten, um ein gegebenes Ereignis zu detektieren;
• Ein Modul (104) zum Ausgeben einer für eine Warnung repräsentativen Information, wenn von dem Modul (103) zum Analysieren ein Ereignis detektiert wird;
**dadurch gekennzeichnet, dass** das Ermitteln eines nicht überwachten Bereichs (Z') das Aufmerksamkeitsniveau des Fahrers (C) berücksichtigt, so dass der nicht überwachte Bereich (Z') umso größer ist, je geringer das Aufmerksamkeitsniveau ist.

8. Vorrichtung (DVC), die eine Verwaltungsentität (100) wie in Anspruch 7 definiert umfasst.

9. Computerprogramm, das geeignet ist, von einer Verwaltungsentität (100) nach Anspruch 7 ausgeführt zu werden, wobei das Programm Codeanweisungen umfasst, die bei seiner Ausführung durch einen Prozessor die Schritte des Verfahrens zur Warnung nach Anspruch 1 ausführen.

10. Datenträger, auf dem ein Computerprogramm nach Anspruch 9 gespeichert ist, das eine Sequenz aus Anweisungen umfasst, die bei seinem Laden in und Ausführen durch einen Prozessor das Verfahren zur Warnung nach Anspruch 1 ausführen.

## Claims

1. Method for alerting the driver (C) of an automobile vehicle (V, V') comprising the following steps:
• A step (S2) for obtaining an area (Z') not monitored by the driver (C) and for activating sensors (91, 92, 93) of the vehicle (V, V') relating to the unmonitored area (Z');
• A step (S3) for analyzing data captured by the sensors (91, 92, 93) relating to the unmonitored area (Z') in order to detect a given event;
• A step (S4) for rendering information representative of an alert if an event is detected during the analysis step (S3);
and
**characterized in that** obtaining an unmonitored area (Z') takes into account the attention level of the driver (C), in such a manner that the lower the attention level, the larger the unmonitored area (Z') obtained.

2. Method for alerting the driver (C) of an automobile vehicle (V, V') according to Claim 1, **characterized in that** the events detected (S3) are categorized and information representative of an alert is rendered (S4) in the case an event is imminent depending on its category.

3. Method for alerting the driver (C) of an automobile vehicle (V') according to either of Claims 1 and 2, **characterized in that** the automobile vehicle (V') is connected to a communications network (N), and **in that** it comprises an additional step (S5) for transmitting information representative of an alert via the communications network (N) to connected vehicles concerned by the event.

4. Method for alerting the driver (C) of an automobile vehicle (V, V') according to one of Claims 1 to 3, **characterized in that** the method comprises a step (S1) for determining an area (Z), referred to as monitoring area, that the driver (C) is monitoring and **characterized in that** the information rendered (S4) consists of a stimulus in the monitoring area (Z) indicating to the driver an alert or an absence of alert coming from the unmonitored area (Z') obtained (S2).

5. Method for alerting the driver (C) of an automobile vehicle (V, V') according to one of Claims 1 to 3, **characterized in that** the information rendered (S4) consists of a stimulus attracting the attention of the driver (C) toward the unmonitored area (Z') obtained (S2).

6. Method for alerting the driver (C) of an automobile vehicle (V, V') according to one of Claims 1 to 5, **characterized in that** the rendering (S') to the driver (C) of information representative of an alert takes into account the attention level of the driver (C), in such a manner that the lower the attention level, the earlier the representative information is rendered (S4).

7. Management entity (100) managing a method for alerting the driver (C) of an automobile vehicle (V, V'), **characterized in that** it comprises the following modules:
• A module (102) for obtaining an area (Z') not monitored by the driver (C) and for activating sensors (91, 92, 93) of the vehicle (V, V') relating to the unmonitored area (Z');
• A module (103) for analyzing data captured by the sensors (91, 92, 93) relating to the unmonitored area (Z') in order to detect a given event;
• A module (104) for rendering information representative of an alert if an event is detected by the analysis module (103);
**characterized in that** obtaining an unmonitored area (Z') takes into account the attention level of the driver (C), in such a manner that the lower the attention level, the larger the unmonitored area (Z') obtained.

8. Device (DVC) comprising a management entity (100) such as defined in Claim 7.

9. Computer program able to be implemented by a management entity (100) according to Claim 7, the program comprising code instructions which, when it is executed by a processor, carries out the steps of the alerting method according to Claim 1.

10. Data medium on which a computer program according to Claim 9 is recorded, comprising a sequence of instructions for the implementation of the alerting method according to Claim 1 when it is loaded into and executed by a processor.
